(19) Europäisches Patentamt
European Patent Office
Office européen des brevets

(11) **EP 4 506 416 A1**

(12) **EUROPEAN PATENT APPLICATION**

(43) Date of publication:
**12.02.2025 Bulletin 2025/07**

(21) Application number: **24192343.2**

(22) Date of filing: **01.08.2024**

(51) International Patent Classification (IPC):
***C08L 67/02*** *(2006.01)*

(52) Cooperative Patent Classification (CPC):
(C-Sets available)
**C08L 67/02** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.08.2023 TW 112129098**

(71) Applicant: **Chimei Corporation
Tainan City 717 (TW)**

(72) Inventor: **HSIEH, Shang-Ju
717 Tainan City (TW)**

(74) Representative: **Krauns, Christian
Wallinger Ricker Schlotter Tostmann
Patent- und Rechtsanwälte Partnerschaft mbB
Zweibrückenstraße 5-7
80331 München (DE)**

(54) **THERMOPLASTIC RESIN COMPOSITION, METHOD FOR PREPARING THERMOPLASTIC RESIN COMPOSITION AND USE OF PLASTIC FILM**

(57)    A thermoplastic resin composition, a method for preparing a thermoplastic resin composition, and a use of a plastic film are provided. The thermoplastic resin composition comprises polybutylene adipate terephthalate, polylactic acid, and an additive. The additive is one selected from the group consisting of phenolic antioxidant and a combination of phenolic antioxidant and styrene maleic anhydride copolymer. The styrene maleic anhydride copolymer has a weight-average molecular weight less than 10000. An amount of the phenolic antioxidant is greater than or equal to 1 ppm and less than 3000 ppm.

**EP 4 506 416 A1**

(52) Cooperative Patent Classification (CPC): (Cont.)

C-Sets
**C08L 67/02, C08K 5/13, C08L 25/08, C08L 67/04;**
**C08L 67/02, C08K 5/13, C08L 35/06, C08L 67/04**

**Description**

BACKGROUND

Technical Field

The disclosure relates to polymer materials, and more particularly to a thermoplastic resin composition, a method for preparing a thermoplastic resin composition, and a use of a plastic film.

Description of the Related Art

Polylactic acid (PLA) is a well-established biodegradable resin at present and is considered a suitable alternative to petroleum-based resins such as polyethylene. Despite its high tensile strength, polylactic acid is not an ideal substitute for polyethylene in the manufacturing of plastic wrap, packaging film and agricultural film due to its inadequate poor tear resistance, slow crystallization rate, low crystallinity and low heat deflection temperature. These characteristics make it challenging for polylactic acid to meet the technical requirements for polyethylene films. Polybutylene adipate terephthalate (PBAT) possesses favorable flexibility, good film formability and high thermal stability, making it ideal for film producing. However, its low strength and modulus, along with its high cost, hinder its widespread adoption. In order to address these limitations and enhance its properties, polybutylene adipate terephthalate is blended with polylactic acid to prepare a PBAT/PLA composite material (People's Republic of China Patent Publication No. CN104744898A).
Incorporating polylactic acid into polybutylene adipate terephthalate has the potential to enhance the elongation properties of the PBAT/PLA composite material. However, this enhancement may come at the cost of reduced tensile strength and tear resistance. Consequently, addressing the challenge of simultaneously maintaining the tensile strength in the transverse direction (transverse direction; TD) and the tear resistance in the machine direction (machine direction; MD) of the film is a critical issue that requires resolution.
Therefore, there is a demand in the market for enhanced PBAT/PLA thermoplastic resin compositions that exhibit superior physical characteristics.

SUMMARY

According to an embodiment of the present disclosure, a thermoplastic resin composition is provided. Thermoplastic resin composition comprises polybutylene adipate terephthalate, polylactic acid, and an additive. The additive is one selected from the group consisting of phenolic antioxidant and a combination of phenolic antioxidant and styrene maleic anhydride (SMA) copolymer. The styrene maleic anhydride copolymer has a weight-average molecular weight (Mw) less than 10000. An amount of the phenolic antioxidant is greater than or equal to 1 ppm and less than 3000 ppm.
According to another embodiment of the present disclosure, a method for preparing a thermoplastic resin composition is provided. The method comprises feeding polybutylene adipate terephthalate, polylactic acid, and an additive into a molding apparatus to produce the thermoplastic resin composition, wherein the additive is one selected from the group consisting of phenolic antioxidant and a combination of phenolic antioxidant and styrene maleic anhydride copolymer. The styrene maleic anhydride copolymer has a weight-average molecular weight less than 10000. An amount of the phenolic antioxidant in the thermoplastic resin composition is greater than or equal to 1 ppm and less than 3000 ppm.
According to yet another embodiment of the present disclosure, a use of a plastic film is provided. The plastic film is produced from the thermoplastic resin composition and has application in various forms such as plastic bags, shopping bags and agricultural films.
The present disclosure provides a thermoplastic resin composition comprising polybutylene adipate terephthalate, polylactic acid, and an additive. It also outlines a method for preparing a thermoplastic resin composition, and a use of a plastic film produced from a thermoplastic resin composition. The thermoplastic resin composition and the plastic film according to the present disclosure exhibit improved tensile strength, tear resistance, crystallinity and thermal stability as a result of their components.
The above and other embodiments of the disclosure will become better understood with regard to the following detailed description of the non-limiting embodiment(s).

DETAILED DESCRIPTION

The present disclosure provides a thermoplastic resin composition. The thermoplastic resin composition includes polybutylene adipate terephthalate, polylactic acid and an additive. The additive is one selected from the group consisting of phenolic antioxidant and a combination of phenolic antioxidant and styrene maleic anhydride copolymer.
The constituents of the thermoplastic resin composition will be described in detail below.

<Polybutylene adipate terephthalate>

Polybutylene adipate terephthalate (PBAT) is a copolymer composed of 1,4-butylene adipate (BA) and butylene terephthalate (BT), combining the characteristics of poly(1,4-butylene adipate) (PBA) and polybutylene terephthalate (PBT). Polybutylene adipate terephthalate possesses favorable mechanical properties and excellent biodegradability. It is a fully biodegradable substance that finds extensive application in agriculture, packaging and medical sectors.

The polybutylene adipate terephthalate described in the present disclosure can be synthesized by conventional methods commonly employed in the art. For example, the polybutylene adipate terephthalate can be obtained through a reaction involving the following constituents, namely constituent (a1) and constituent (a2). (a1) 35 mol% (mole percentage) to 95 mol%, preferably 45 mol% to 80 mol%, of hexanedioic acid or ester derivatives thereof (particularly $C_1$-$C_6$ dialkyl ester, such as dimethyl adipate, diethyl adipate, dipropyl adipate, dibutyl adipate, dipentyl adipate, dihexyl adipate, or mixtures thereof, preferably hexanedioic acid, dimethyl adipate and mixtures thereof), and 5 mol% to 65 mol%, preferably 20 mol% to 55 mol%, of benzene-1,4-dicarboxylic acid or ester derivatives thereof (particularly $C_1$-$C_6$ dialkyl ester, such as dimethyl terephthalate, diethyl terephthalate, dipropyl terephthalate, dibutyl terephthalate, dipentyl terephthalate, dihexyl terephthalate, or mixtures thereof, preferably benzene-1,4-dicarboxylic acid, dimethyl terephthalate and mixtures thereof); the sum of all the mole percentages in (a1) is equal to 100%. (a2) dihydroxy compound selected from $C_2$-$C_6$ alkanediol and $C_5$-$C_{10}$ cycloalkanediol. The mole ratio of constituent (a1) to constituent (a2) is between 0.4:1 and 1.5:1, preferably between 0.6:1 and 1.1:1.

The above dihydroxy compound (a2) is selected from $C_2$-$C_6$ alkanediol and $C_5$-$C_{10}$ cycloalkanediol, such as ethane-1,2-diol, propane-1,2-diol, propane-1,3-diol, 1,2-butanediol, 1,4-butanediol, 1,5-pentanediol, or 1,6-hexanediol, particularly ethane-1,2-diol, propane-1,3-diol, 1,4-butanediol, cyclopentanediol, 1,4-cyclohexanediol, 1,2-cyclohexanedimethanol, 1,4-cyclohexanedimethanol and mixtures thereof, more preferably 1,4-butanediol, and the amount of constituent (a2) is between 95 mol% and 100 mol% based on the amount of constituent (a1). In addition to constituent (a1) and constituent (a2), 0 mol% to 5 mol%, preferably 0.05 mol% to 4 mol%, of at least one compound D (based on the amount of constituent (a1)) having at least three groups capable of forming esters can be used in the synthesis of polybutylene adipate terephthalate. Preferably, the compound D has 3-10 functional groups capable of forming ester bonds. More preferably, the compound D has 3-6 functional groups capable of forming ester bonds, particularly 3-6 hydroxyl and/or carboxyl groups. For example, tartaric acid, citric acid, malic acid, trimethylolpropane, trimethylolethane, pentaerythritol, polyether triols, glycerin, 1,3,5-triellitic acid, 1,2,4-triellitic acid, anhydride, 1,2,4,5-benzenetetracarboxylic acid, dianhydrides and hydroxyisophthalic acid.

The amount (T%) of butylene terephthalate units in polybutylene adipate terephthalate falls within the range of 35 wt% and 65 wt% (weight percentage). If the T% is below 35 wt%, the resulting product will be excessively soft for practical use. Conversely, if it exceeds 65 wt%, the product will be too rigid for practical applications. The viscosity number falls between 30 g/ml and 350 g/ml, preferably between 50 g/ml and 300 g/ml (measured in 50:50w/w orthodichlorobenzene/hydroxybenzene, 25 °C, the concentration of PBAT is 0.5 wt%). The melting point ranges between 50 °C and 170 °C, preferably between 60 °C and 160 °C.

Preferably, polybutylene adipate terephthalate includes polybutylene adipate terephthalate Ecoflex, polybutylene adipate terephthalate FLEX-262, polybutylene adipate terephthalate EBAG-262, polybutylene adipate terephthalate Ecoworld. More preferably, polybutylene adipate terephthalate is polybutylene adipate terephthalate Ecoworld. In the present disclosure, polybutylene adipate terephthalate Ecoflex is preferably from BASF SE; polybutylene adipate terephthalate FLEX-262 and polybutylene adipate terephthalate EBAG-262 are preferably from GUANGDONG KINGFA SCI.& TECH. CO., LTD.; polybutylene adipate terephthalate Ecoworld is preferably from JinHui ZhaoLong High Technology Co., Ltd.

In an embodiment, the temperature corresponding to 10% mass loss (TGA-10%) of the polybutylene adipate terephthalate used in the present disclosure in the thermogravimetric analysis is less than 400 °C, preferably less than 390 °C, more preferably less than 380 °C.

In addition, the weight-average molecular weight of the polybutylene adipate terephthalate according to the present disclosure is generally between 10,000 and 400,000, preferably between 50,000 and 400,000, more preferably between 80,000 and 300,000. The weight-average molecular weight of the polybutylene adipate terephthalate is obtained by gel permeation chromatography (GPC) with oxolane as a solvent, a refractive index detector (RI) as a detector, and polystyrene with known molecular weight as standards.

<Polylactic acid>

Polylactic acid can be classified into two types: one derived from the condensation of lactic acid alone as monomers; and the other derived from the condensation of a combination of lactic acid and another hydroxycarboxylic acid constituent as monomers.

In the present disclosure, the lactic acid constituent may consist of either one or both enantiomers of lactic acid. To enhance the flexibility, rigidity, heat resistance, and the productivity of polylactic acid during molding, it is recommended to utilize lactic acid with high optical purity, containing one of enantiomers as a main constituent. The term "main constituent" used in the specification represents a constituent with an amount greater than or equal to 80 mol% in the lactic acid constituent.

From the above point of view, in case where a condensation reaction involves only lactic acid constituent, it is preferable for the lactic acid constituent to consist of 95.0 mol% or more of either the L form (levorotatory; L-lactic acid) or D form (dexterotatory; D-lactic acid) , with a preference for 98 mol% or more.

From the above point of view, in case where a condensation reaction between the lactic acid constituent and the hydroxycarboxylic acid constituent, it is preferable for the lactic acid constituent to consist of 95.0 mol% or more of either the L form or D form in the lactic acid constituent (that is, the amount of the more abundant one of the aforementioned isomers), with a preference for 98 mol% or more.

In addition, the polylactic acid mentioned above may derived from the condensation of only D-lactic acid, only L-lactic acid, a combination of D-lactic acid and L-lactic acid, or a mixture of polylactic acid predominantly composed of L-lactic acid and predominantly composed of D-lactic acid in any proportion.

In addition, apart from lactic acid, the hydroxycarboxylic acid constituent may consist of other hydroxycarboxylic acid compounds such as glycolic acid, hydroxybutyric acid, hydroxyvalerenic acid, hydroxyvaleric acid, hydroxycaproic acid and hydroxyheptanoic acid. These hydroxycarboxylic acid compounds can be utilized individually or in combination with two or more the listed compounds. Preferably, the hydroxycarboxylic acid constituent is glycolic acid or hydroxycaproic acid.

In addition, in the present disclosure, the lactic acid constituent may consist of dimers of lactic acids, and the hydroxycarboxylic acid constituent may comprise dimers of hydroxycarboxylic acid compounds. For example, dimers of lactic acids can be cyclic dimers of lactic acids, i.e. lactide. For example, dimers of hydroxycarboxylic acid compounds can be cyclic dimers of glycolic acid, i.e. glycolide. Lactide includes cyclic dimers of L-lactic acids (L-lactide), cyclic dimers of D-lactic acids (D-lactide), meso-lactide obtained by cyclic dimerization of D-lactic acid and L-lactic acid, and DL-lactide, which is a racemate of D-lactide and L-lactide. Any type of lactide can be used in the present disclosure. In terms of the flexibility and rigidity of polylactic acid, and the efficiency of polylactic acid resin in molding processes, it is recommended to use D-lactide and L-lactide. It is recognized that s lactic acids dimer can be incorporated in either the condensation of only lactic acid constituent or the condensation of the lactic acid constituent and the hydroxycarboxylic acid constituent.

The condensation reaction involving only lactic acid constituent or the condensation reaction of the lactic acid constituent and the hydroxycarboxylic acid constituent can be carried out using established methods, without specific constraints.

The weight-average molecular weight range of polylactic acid in the present disclosure is typically falls within the range of 10,000 and 400,000, with preferably between 50,000 and 400,000, and more preferably between 80,000 and 300,000. The reason for selecting this weight-average molecular weight range is that when the weight-average molecular weight of polylactic acid is below the above range, the mechanical properties of the molded resin product are diminished; when the weight-average molecular weight of polylactic acid exceeds the above range, it can result in decreased the fluidity during the molding process. Moreover, the weight-average molecular weight of the polylactic acid is determined using gel permeation chromatography (GPC) with oxolane as the solvent, a refractive index detector (RI) for detection, and polystyrene with established molecular weight as reference standards.

In an embodiment, the temperature at which the polylactic acid in the current study experiences a 10% mass loss (TGA-10%) during the thermogravimetric analysis is less than 360 °C, preferably less than 355 °C, more preferably less than 345 °C.

Preferably, the polylactic acid includes one or more of polylactic acid LX175, polylactic acid L130, polylactic acid LX530, polylactic acid 4032D, polylactic acid 3001D, polylactic acid FY801, polylactic acid FY802, polylactic acid FY601 and polylactic acid REVODE110. More preferably, the polylactic acid is polylactic acid LX175. In the present disclosure, polylactic acid LX175, polylactic acid L130 and polylactic acid LX530 are preferably from TotalEnergies Corbion Ltd. (Thailand); polylactic acid 4032D, polylactic acid 3001D and polylactic acid 2003D are preferably from NatureWorks LLC (United States); polylactic acid FY801, polylactic acid FY802 and polylactic acid FY601 are preferably from Anhui BBCA Biochemical Co., Ltd; polylactic acid REVODE110 is preferably from Zhejiang Hisun Biomaterials Co., Ltd.

<Additive>

The additive can be a phenolic antioxidant. Alternatively, the additive can be a combination of phenolic antioxidant and styrene maleic anhydride copolymer.

The phenolic antioxidant is a primary antioxidant. The phenolic antioxidant refers to an antioxidant with a phenolic hydroxyl group in its molecule, such as an antioxidant with an alkyl group and -OH group (phenolic hydroxyl group) occupy positions next to each other. The phenolic antioxidant can be an antioxidant which steric effects seen in its molecule, wherein the phenol ring in the molecule is substituted with one or more alkyl groups, such as methyl, ethyl, isopropyl and tert-butyl. The phenolic antioxidant is not particularly limited. In an embodiment, the phenolic antioxidant can be at least one selected from the group consisting of pentaerythritol tetrakis(3-(3,5-di-tert-butyl-4-hydroxyphenyl)propionate), octadecyl-[3-(3,5-di-tert-butyl-4-hydroxyphenyl)propionate], 3,5-bis(1,1-dimethylethyl)-4-hydroxyphenylpropionate stearyl ester, triethylene glycol bis[3-(3-tert-butyl-5-methyl-4-hydroxyphenyl)propionate], tetrakis[methylene-3-(3,5-bis-tert-butyl-4-hydroxyphenyl)propionate]methane, 2-tert-butyl-6-(3-tert-butyl-2-hydroxy-6-methylbenzyl)-4-methylphenyl acrylate, and 2,2'-methylene-bis(4-methyl-6-tert-butylphenol). In an embodiment, the phenolic antioxidant can be at least one selected from the group consisting of pentaerythritol tetrakis(3-(3,5-di-tert-butyl-4-hydroxyphenyl)propionate), octadecyl-[3-(3,5-di-tert-butyl-4-hydroxyphenyl)propionate], triethylene glycol bis(3-tert-butyl-4-hydroxy-5-methylphenyl)propionate, and octyl-3,5-di-tert-butyl-4-hydroxy-hydrocinnamate. The above phenolic antioxidants can be used alone or more than one of the above phenolic antioxidants can be used in combination.

Examples of commercially available phenolic antioxidant includes Irganox® 1010, Irganox® 1076, Irganox®1098, Irganox® 1425 WL, Irganox® 3114, Irganox® 245 and Iiganox® 1135. The above phenolic antioxidants can be used alone or more than one of the above phenolic antioxidants can be used in combination.

The amount of the phenolic antioxidant is greater than or equal to 1 ppm and less than 3000 ppm relative to the total amount of thermoplastic resin composition. Alternatively, the amount of the phenolic antioxidant is greater than or equal to 400 ppm and less than or equal to 2800 ppm relative to the total amount of thermoplastic resin composition. Alternatively, the amount of the phenolic antioxidant is greater than or equal to 800 ppm and less than or equal to 2300 ppm relative to the total amount of thermoplastic resin composition.

The styrene maleic anhydride copolymer is a copolymer of styrene monomers and maleic anhydride monomers. For example, the styrene maleic anhydride copolymer can be a linear random copolymer, a branched copolymer, a linear block copolymer, or a branched block copolymer. The styrene monomers may include styrene, $\alpha$-methylstyrene, p-tert-butylstyrene, p-methylstyrene, o-methylstyrene, m-methylstyrene, 2,4-dimethylstyrene, ethylstyrene, $\alpha$-methyl-p-methylstyrene, bromostyrene, etc. The above styrene monomers can be used alone or more than one of the above styrene monomers can be used in combination. In an embodiment, the styrene monomers can be selected from one or more of styrene and $\alpha$-methylstyrene. The maleic anhydride monomers may include maleic anhydride, itaconic anhydride, citraconic anhydride, aconitic anhydride, etc. The above maleic anhydride monomers can be used alone or more than one of the above maleic anhydride monomers can be used in combination.

The additive can be a combination of styrene maleic anhydride copolymer and phenolic antioxidant. As compared with only using phenolic antioxidant as additive, using a combination of styrene maleic anhydride copolymer and phenolic antioxidant as additive can further improve physical properties, and significantly increase tear resistance and tensile strength, especially the tensile strength in the width direction (transverse direction; TD) of the film and the tear resistance in the length direction (machine direction; MD) of the film. In the case of using a combination of styrene maleic anhydride copolymer and phenolic antioxidant as additive, the total amount of additive is between 1 ppm and 5000 ppm, preferably between 500 ppm and 4000 ppm, more preferably between 1000 ppm and 3000 ppm based on the total amount of thermoplastic resin composition; the amount of styrene maleic anhydride copolymer is between 1 ppm and 2000 ppm, preferably between 100 ppm and 1500 ppm, more preferably between 500 ppm and 1000 ppm based on the total amount of thermoplastic resin composition. The selection of phenolic antioxidant is as described above. The amount of phenolic antioxidant is greater than or equal to 1 ppm and less than 3000 ppm. The weight-average molecular weight (Mw) of styrene maleic anhydride copolymer is less than 10000, preferably less than 8000, more preferably less than 6000; the weight-average molecular weight (Mw) of styrene maleic anhydride copolymer is greater than 1000, preferably greater than 2000, more preferably greater than 3000. The amount of maleic anhydride monomers in the styrene maleic anhydride copolymer is between 20% and 55%, preferably between 20% and 50%, more preferably between 30% and 45%.

In an embodiment of the present disclosure, a weight ratio of the polybutylene adipate terephthalate to the polylactic acid in the thermoplastic resin composition falls within the range of 9.5:0.5 to 0.5:9.5, preferably for ratios between 9.5:0.5 and 4:6, and a more preferably for ratios between 9:1 and 1:1. In an embodiment of the present disclosure, the thermoplastic resin composition is characterized by a polydispersity index (mass-average molecular weight / number-average molecular weight; Mw/Mn) ranging from 1.00 to 2.00, preferably for ratios between 1.50 and 2.00, more preferably for ratios between 1.80 and 2.00.

In embodiments of the present disclosure, the weight ratio of the polybutylene adipate terephthalate to the polylactic acid in the thermoplastic resin composition falls within the range of 9.5:0.5 to 4:6, the additive is pentaerythritol tetrakis(3-(3,5-di-tert-butyl-4-hydroxyphenyl)propionate) or octadecyl-[3-(3,5-di-tert-butyl-4-hydroxyphenyl)propionate] or a combination of pentaerythritol tetrakis(3-(3,5-di-tert-butyl-4-hydroxyphenyl)propionate) and styrene maleic anhydride copolymer or a combination of octadecyl-[3-(3,5-di-tert-butyl-4-hydroxyphenyl)propionate] and styrene maleic anhydride copolymer, the amount of the phenolic antioxidant is greater than or equal to 1 ppm and less than 3000 ppm relative to the total amount of thermoplastic resin composition, the weight-average molecular weight of styrene maleic anhydride copolymer is less than 10000, and the tensile strength in the width direction (transverse direction; TD) of the film formed by the thermoplastic resin composition is greater than 20 MPa; in an embodiment where the weight ratio of the polybutylene adipate terephthalate to the polylactic acid in the thermoplastic resin composition falls within the range of 9.5:0.5 to 7:3, the tear resistance in the length direction (machine direction; MD) of the film is greater than 1650 MPa; in an embodiment where the weight ratio of the polybutylene adipate terephthalate to the polylactic acid in the thermoplastic resin composition falls within the range of 6:4 to 4:6, the tear resistance in the length direction (machine direction; MD) of the film is greater than 110 MPa. The film has different physical property requirements in the length direction (MD) and width direction (TD). For example, in film applications, it is necessary for the film to exhibit tensile strength in the MD direction, while also being capable of being blown or stretched biaxially in the TD direction.

In embodiments of the present disclosure, the weight ratio of the polybutylene adipate terephthalate to the polylactic acid in the thermoplastic resin composition falls within the range of 9.5:0.5 to 7:3, the additive is 400 ppm~2800 ppm of pentaerythritol tetrakis(3-(3,5-di-tert-butyl-4-hydroxyphenyl)propionate) or 1800 ppm~2300 ppm of octadecyl-[3-(3,5-di-tert-butyl-4-hydroxyphenyl)propionate] relative to the total amount of thermoplastic resin composition, and the tear resistance in the machine direction (MD) of the film formed by the thermoplastic resin composition is greater than 1650 MPa and the elongation in the machine direction (MD) of the film formed by the thermoplastic resin composition is greater than 600%. The present disclosure provides films which exhibit high tensile strength in the MD direction and possess exceptional resistance to tearing.

In embodiments of the present disclosure, the weight ratio of the polybutylene adipate terephthalate to the polylactic acid in the thermoplastic resin composition falls within the range of 6:4 to 4:6, the additive is 1800 ppm~2300 ppm of pentaerythritol tetrakis(3-(3,5-di-tert-butyl-4-hydroxyphenyl)propionate) or 400 ppm~2800 ppm of octadecyl-[3-(3,5-di-tert-butyl-4-hydroxyphenyl)propionate] relative to the total amount of thermoplastic resin composition, the tear resistance in the machine direction (MD) of the film formed by the thermoplastic resin composition is greater than 110 MPa and the elongation in the transverse direction (TD) of the film formed by the thermoplastic resin composition is greater than 26.5%. For example, in film applications, it is necessary for the film to exhibit tensile strength in the MD direction, while also being capable of being blown or stretched biaxially in the TD direction.

In embodiments of the present disclosure, the weight ratio of the polybutylene adipate terephthalate to the polylactic acid in the thermoplastic resin composition falls within the range of 9.5:0.5 to 7:3, the additive is 400 ppm~2800 ppm of pentaerythritol tetrakis(3-(3,5-di-tert-butyl-4-hydroxyphenyl)propionate) relative to the total amount of thermoplastic resin composition, and the tensile strength in the machine direction (MD) of the film formed by the thermoplastic resin composition is greater than 33 MPa. For example, in film applications, plastic bags must possess sufficient load-bearing capacity in the MD direction to prevent breakage.

In embodiments of the present disclosure, the weight ratio of the polybutylene adipate terephthalate to the polylactic acid in the thermoplastic resin composition falls within the range of 6:4 to 4:6, the additive is 1800 ppm~2300 ppm of pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, and the tensile strength in the machine direction (MD) of the film formed by the thermoplastic resin composition is greater than 33 MPa. For example, in film applications, plastic bags must possess sufficient load-bearing capacity in the MD direction to prevent breakage.

In embodiments of the present disclosure, the weight ratio of the polybutylene adipate terephthalate to the polylactic acid in the thermoplastic resin composition falls within the range of 9.5:0.5 to 7:3, the additive is 800 ppm~1300 ppm of pentaerythritol tetrakis(3-(3,5-di-tert-butyl-4-hydroxyphenyl)propionate) (or octadecyl-[3-(3,5-di-tert-butyl-4-hydroxyphenyl)propionate]) and 100 ppm~1500 ppm of styrene maleic anhydride copolymer relative to the total amount of thermoplastic resin composition, the weight-average molecular weight of styrene maleic anhydride copolymer is less than 10000, the tensile strength in the transverse direction (TD) of the film formed by the thermoplastic resin composition is greater than 20 MPa, and the tear resistance in the machine direction (MD) of the film formed by the thermoplastic resin composition is greater than 1650 MPa.

In embodiments of the present disclosure, the weight ratio of the polybutylene adipate terephthalate to the polylactic acid in the thermoplastic resin composition falls within the range of 9.5:0.5 to 7:3, the additive is 1800 ppm~2300 ppm of pentaerythritol tetrakis(3-(3,5-di-tert-butyl-4-hydroxyphenyl)propionate) relative to the total amount of thermoplastic resin composition, the temperature corresponding to 10% mass loss (TGA-10%) of the thermoplastic resin composition in the thermogravimetric analysis can be greater than or equal to 358 °C and the temperature difference is greater than 1.6 °C. Alternatively, in an embodiment where the weight ratio of the polybutylene adipate terephthalate to the polylactic acid in the thermoplastic resin composition falls within the range of 6:4 to 4:6, the additive is 400 ppm~2800 ppm of pentaerythritol tetrakis(3-(3,5-di-tert-butyl-4-hydroxyphenyl)propionate) relative to the total amount of thermoplastic resin composition, the temperature corresponding to 10% mass loss (TGA-10%) of the thermoplastic resin composition in the thermogravimetric analysis can be greater than or equal to 343 °C and the temperature difference is greater than 13 °C.

In embodiments of the present disclosure, the weight ratio of the polybutylene adipate terephthalate to the polylactic acid in the thermoplastic resin composition falls within the range of 9.5:0.5 to 7:3, the additive is 1800 ppm~2300 ppm of pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, the temperature corresponding to 10% mass loss (TGA-10%) of the thermoplastic resin composition in the thermogravimetric analysis can be greater than or equal to 358 °C and the temperature difference is greater than 1.6 °C.

In embodiments of the present disclosure, the weight ratio of the polybutylene adipate terephthalate to the polylactic acid in the thermoplastic resin composition falls within the range of 6:4 to 4:6, the additive is 1800 ppm~2300 ppm of pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, the temperature corresponding to 10% mass loss (TGA-10%) of the thermoplastic resin composition in the thermogravimetric analysis can be greater than or equal to 343 °C and the temperature difference is greater than 13 °C.

In embodiments of the present disclosure, the weight ratio of the polybutylene adipate terephthalate to the polylactic acid in the thermoplastic resin composition falls within the range of 9.5:0.5 to 7:3, the additive is 800 ppm~1300 ppm of pentaerythritol tetrakis(3-(3,5-di-tert-butyl-4-hydroxyphenyl)propionate) and 100 ppm~1500 ppm of styrene maleic anhydride copolymer relative to the total amount of thermoplastic resin composition, the weight-average molecular weight of styrene maleic anhydride copolymer is less than 10000, the temperature corresponding to 10% mass loss (TGA-10%) of the thermoplastic resin composition in the thermogravimetric analysis can be greater than or equal to 365 °C and the temperature difference is greater than 8 °C.

In an embodiment, in addition to the above polybutylene adipate terephthalate, polylactic acid, and additive, the thermoplastic resin composition may also include other constituents such as modifier and colorant. In an embodiment, the thermoplastic resin composition consists of polybutylene adipate terephthalate, polylactic acid, and additive.

The present disclosure provides a method for preparing a thermoplastic resin composition. The method includes feeding the above polybutylene adipate terephthalate, the above polylactic acid and the above additive into a molding apparatus to mix the polybutylene adipate terephthalate, the polylactic acid and the additive to produce a solid thermoplastic resin composition. The molding apparatus can include a dryer and/or a blender, and/or a mixer, and/or an extrusion machine, and/or an injection machine, and/or a plastic pellet making machine, and/or a film forming machine, etc. The thermoplastic resin composition includes the above constituents in the above content range. The relative proportions and/or contents of polybutylene adipate terephthalate, polylactic acid, and additive may be substantially unchanged before and after passing through the molding apparatus.

The thermoplastic resin composition according to the present disclosure can be used in degradable plastic products. In some embodiments, the thermoplastic resin composition according to the present disclosure can be used to form plastic films. The plastic film can be made from the above thermoplastic resin composition. For example, the plastic film can be made from the above thermoplastic resin composition through a blow molding process. For example, the thermoplastic resin composition can be softened, the softened thermoplastic resin composition can be extruded and inflated into a hollow shape of a certain size at a certain pressure and speed, and then the material is cooled and/or stretched to form a plastic film. The tensile strength and elongation are determined according to ISO 527 standard, and the tear resistance is determined according to ISO 6838 standard. The plastic film according to the present disclosure can be used in any one of plastic bags, shopping bags and agricultural films. The thermoplastic resin composition according to the present disclosure can be used in molding processes such as injection molding, compression molding, extrusion molding, stretch blow molding, vacuum forming and blow molding to form plastic products.

The present disclosure will be described with reference to the following Examples and Comparative examples below. However, the present disclosure is not limited to the constituents, contents and proportions disclosed in the following Examples.

<Preparation of thermoplastic resin composition>

Monomers and additives used in the following Examples and Comparative examples are as follows:

Polybutylene adipate terephthalate (PBAT): C1200 from BASF, Mn: 55,719, Mw: 125703, TGA-10%: 374.0°C.
Polylactic acid: 2003D from Natureworks, Mn: 117,210, Mw: 213,023, TGA-10%: 340.3°C.

Additives:

(1) Phenolic antioxidants

Pentaerythritol tetrakis(3-(3,5-di-tert-butyl-4-hydroxyphenyl)propionate): Irganox® 1010

Octadecyl-[3-(3,5-di-tert-butyl-4-hydroxyphenyl)propionate]: Irganox® 1076

(2) Non-phenolic antioxidants

Tris(2,4-di-tert-butylphenyl)phosphite: Irganox® 168

2-{1-[2-Hydroxy-3,5-bis(2-methylbut-2-yl)phenyl]ethyl}-4,6-bis(2-methylbut-2-yl)benzene acrylate: GS

(3) Styrene maleic anhydride copolymer

XIRAN 1000P, weight-average molecular weight: 3385, maleic anhydride monomer content: 42%

XIRAN 4000, weight-average molecular weight: 10536, maleic anhydride monomer content: 24%

Based on the constituents, contents and ratios detailed in TABLE 1, TABLE 2, TABLE 3 and TABLE 4, the polybutylene adipate terephthalate, polylactic acid and additives undergo a molding process to produce thermoplastic resin compositions for Examples 1 to 10 and Comparative Examples 1 to 24.

<Preparation of plastic film>

The plastic film is produced using a thermoplastic resin composition via a blow molding technique, with a film thickness of 25 μm.

<Evaluation of thermoplastic resin composition>

The number-average molecular weight and weight-average molecular weight are determined using gel permeation chromatography (GPC) with oxolane as the solvent, a refractive index detector (RI) for detection, and polystyrene with known molecular weight as standards. The columns used are Agilent Part No. PL1110-6520 / PLgel 5 μm 100Å 300 × 7.5 mm, Part No. PL1110-6525 / PLgel 5 μm 500Å 300 × 7.5 mm, Part No. PL1110-6530 / PLgel 5 μm 1000Å 300 × 7.5 mm, and Part No. PL1110-6540 / PLgel 5 μm 10000Å 300 × 7.5 mm. The crystallization temperatures (Tc) of the thermoplastic resin compositions in both the Examples and Comparative Examples were analyzed using a differential scanning calorimeter (DSC) Q2000 from TA Instruments. The thermogravimetric analysis (TGA) is conducted using the Q5000 analyzer from TA Instruments. In the present disclosure, the temperature at which 10% mass loss of sample occurs due to heating in nitrogen environment is recorded, denoted by the term TGA-10%. The crystallinity (Xc) is calculated according to the following Formula 1. In the Formula 1, $\Delta Hm$ is the enthalpy of fusion (J/g), $\Delta Hcc$ is the cold crystallization enthalpy (J/g), $\Delta Hm^0$ of polybutylene adipate terephthalate is 114 J/g, $\Delta Hm^0$ of polylactic acid is 93.6 J/g, and $\varphi i$ represents the proportion of the weight of polybutylene adipate terephthalate or polylactic acid in relation to the combined weight of polybutylene adipate terephthalate and polylactic acid. The evaluation results are shown in the following TABLE 1 to TABLE 7.

$$Xc = \frac{\Delta Hm - \Delta Hcc}{\Delta Hm^0 \times \varphi i} \times 100$$    (Formula 1)

<Evaluation of plastic film>

The thickness of the film is 25 μm. The tensile strength and elongation are determined according to ISO 527 standard. The tear resistance is determined following the ISO 6838 standard. The tensile properties of the plastic films produced from the thermoplastic resin compositions outlined in Examples 1 to 10 and Comparative Examples 1 to 14 are evaluated. The evaluation results are shown in the following TABLE 1 and TABLE 2.

[TABLE 1]

|  |  |  | Example 1 | Example 2 | Example 3 | Example 4 | Example 5 |
|---|---|---|---|---|---|---|---|
| Constituents | | PBAT (%) | 90 | 90 | 90 | 90 | 50 |
| | | PLA (%) | 10 | 10 | 10 | 10 | 50 |
| | Additive | Irganox® 1010 (ppm) | 1000 | 2000 | - | - | 1000 |
| | | Irganox®1076 (ppm) | - | - | 1000 | 2000 | - |
| | | XIRAN1000P (ppm) | | - | - | - | - |
| Evaluation result | | Tc (°C) | 59.1 | 61.7 | 58.3 | 58.9 | 57 |
| | | Xc (%) | 12.3 | 13 | 12.4 | 12.6 | 8 |
| | | TGA-10% (°C) | 357.7 | 358.8 | 357.9 | 358.7 | 343.4 |
| | | Tear resistance in MD direction (MPa) | 1712 | 1726.4 | 1693.2 | 1695.6 | 113 |
| | | Tensile strength in MD direction (MPa) | 40.1 | 33.9 | 28.7 | 29.2 | 27.2 |
| | | Elongation in MD direction (%) | 644.2 | 637 | 561.4 | 626.6 | 23.2 |
| | | Tear resistance in TD direction (MPa) | 558.4 | 564.6 | 531.8 | 550.4 | 193 |
| | | Tensile strength in TD direction (MPa) | 22.1 | 20.4 | 20 | 20.3 | 21 |
| | | Elongation in TD direction (%) | 575.4 | 539.2 | 502.8 | 541.8 | 22 |
|  |  |  | Example 6 | Example 7 | Example 8 | Example 9 | Example 10 |
| Constituents | | PBAT (%) | 50 | 50 | 50 | 90 | 90 |
| | | PLA (%) | 50 | 50 | 50 | 10 | 10 |
| | Additive | Irganox® 1010 (ppm) | 2000 | - | - | 1000 | - |
| | | Irganox®1076 (ppm) | - | 1000 | 2000 | - | 1000 |
| | | XIRAN1000P (ppm) | - | - | - | 750 | 750 |

(continued)

| | | | Example 6 | Example 7 | Example 8 | Example 9 | Example 10 |
|---|---|---|---|---|---|---|---|
| Evaluation result | Tc (°C) | | 60.8 | 56.2 | 56.4 | 56.7 | 56.9 |
| | Xc (%) | | 8.8 | 8 | 8.7 | 13.0 | 12.9 |
| | TGA-10% (°C) | | 344.1 | 343.1 | 344.5 | 367.5 | 365.4 |
| | Tear resistance in MD direction (MPa) | | 117 | 113 | 117 | 1896.2 | 1829 |
| | Tensile strength in MD direction (MPa) | | 39 | 31.8 | 33.2 | 44 | 33.6 |
| | Elongation in MD direction (%) | | 27.1 | 24.7 | 27.8 | 657.6 | 630.6 |
| | Tear resistance in TD direction (MPa) | | 225 | 217 | 257 | 597.2 | 586 |
| | Tensile strength in TD direction (MPa) | | 21.1 | 20.7 | 21 | 25.3 | 22.3 |
| | Elongation in TD direction (%) | | 28.2 | 26.5 | 27.4 | 588.4 | 576.8 |

[TABLE 2]

| Constituents | | | Comparative Example 1 | Comparative Example 2 | Comparative Example 3 | Comparative Example 4 | Comparative Example 5 |
|---|---|---|---|---|---|---|---|
| | PBAT (%) | | 90 | 90 | 90 | 90 | 90 |
| | PLA (%) | | 10 | 10 | 10 | 10 | 10 |
| | Additive | Irganox® 1010 (ppm) | - | 3000 | 5000 | - | - |
| | | Irganox® 1076 (ppm) | - | - | - | 3000 | 5000 |
| | | XIRAN1000P (ppm) | | - | - | - | - |
| | | XIRAN4000 (ppm) | | - | - | - | - |
| Evaluation result | Tc (°C) | | 57.6 | 60.5 | 59.9 | 58.6 | 58.5 |
| | Xc (%) | | 12.1 | 12.7 | 12.5 | 12.1 | 12.1 |
| | TGA-10% (°C) | | | 358.7 | 357.6 | 357.5 | 353.2 |
| | Tear resistance in MD direction (MPa) | | 1356.2 | 1704.2 | 1699.2 | 1677.2 | 1675.6 |
| | Tensile strength in MD direction (MPa) | | 26.9 | 31.6 | 31.2 | 27.4 | 27.1 |
| | Elongation in MD direction (%) | | 497.2 | 602.6 | 595.8 | 566 | 548.6 |
| | Tear resistance in TD direction (MPa) | | 494.4 | 545 | 530.4 | 544.2 | 508.8 |
| | Tensile strength in TD direction (MPa) | | 16.7 | 17.7 | 17.6 | 18.9 | 17.1 |
| | Elongation in TD direction (%) | | 484.2 | 506.4 | 496.2 | 529.6 | 489.4 |

| Constituents | | | Comparative Example 6 | Comparative Example 7 | Comparative Example 8 | Comparative Example 9 | Comparative Example 10 |
|---|---|---|---|---|---|---|---|
| | PBAT (%) | | 50 | 50 | 50 | 50 | 50 |
| | PLA (%) | | 50 | 50 | 50 | 50 | 50 |
| | Additive | Irganox® 1010 (ppm) | - | 3000 | 5000 | - | - |
| | | Irganox® 1076 (ppm) | - | - | - | 3000 | 5000 |
| | | XIRAN1000P (ppm) | - | - | - | - | - |
| | | XIRAN4000 (ppm) | - | - | - | - | - |

| | | Comparative Example 6 | Comparative Example 7 | Comparative Example 8 | Comparative Example 9 | Comparative Example 10 |
|---|---|---|---|---|---|---|
| Evaluation result | Tc (°C) | 56.1 | 57.7 | 55.5 | 56.1 | 55.9 |
| | Xc (%) | 7.6 | 8.5 | 8.1 | 8.2 | 7.7 |
| | TGA-10% (°C) | 329.8 | 342 | 341.8 | 341.4 | 339.2 |
| | Tear resistance in MD direction (MPa) | 88.4 | 104.6 | 96.6 | 113 | 100.8 |
| | Tensile strength in MD direction (MPa) | 28.2 | 29.6 | 27.4 | 32 | 31.4 |
| | Elongation in MD direction (%) | 21.6 | 25.6 | 23.1 | 27.1 | 23.7 |
| | Tear resistance in TD direction (MPa) | 165 | 221 | 205 | 225 | 209 |
| | Tensile strength in TD direction (MPa) | 18.1 | 19.3 | 18.3 | 19.7 | 19 |
| | Elongation in TD direction (%) | 21.3 | 24.1 | 23.9 | 25 | 24.3 |

(continued)

| | | | Comparative Example 11 | Comparative Example 12 | Comparative Example 13 | Comparative Example 14 |
|---|---|---|---|---|---|---|
| Constituents | | PBAT (%) | 90 | 90 | 90 | 90 |
| | | PLA (%) | 10 | 10 | 10 | 10 |
| | Additive | Irganox® 1010 (ppm) | - | - | 1000 | - |
| | | Irganox® 1076 (ppm) | - | - | - | 1000 |
| | | XIRAN1000P (ppm) | 750 | - | - | - |
| | | XIRAN4000 (ppm) | - | 1500 | 1500 | 1500 |
| Evaluation result | | Tc (°C) | 56.2 | 55.8 | 56.9 | 56 |
| | | Xc (%) | 13.1 | 12.8 | 12.9 | 12.3 |
| | | TGA-10% (°C) | 357.1 | 344.8 | 350.4 | 348.9 |
| | | Tear resistance in MD direction (MPa) | 1629.2 | 1461.4 | 1672.2 | 1719.4 |
| | | Tensile strength in MD direction (MPa) | 29.6 | 26.6 | 30.5 | 29.8 |
| | | Elongation in MD direction (%) | 625.2 | 508.6 | 539.6 | 524.8 |
| | | Tear resistance in TD direction (MPa) | 524.6 | 501.8 | 519.4 | 506.4 |
| | | Tensile strength in TD direction (MPa) | 20.3 | 16.4 | 19.2 | 17.8 |
| | | Elongation in TD direction (%) | 575.8 | 503.2 | 512.6 | 505.2 |

The improved physical properties of the thermoplastic resin composition are evident in TABLE 1 and TABLE 2, when the thermoplastic resin composition includes PBAT, PLA and an additive, the additive consists of either phenolic antioxidant alone or a combination of phenolic antioxidant and styrene maleic anhydride copolymer, with the styrene maleic anhydride copolymer having a weight-average molecular weight is less than 10000. The amount of the phenolic antioxidant is greater than or equal to 1 ppm but less than 3000 ppm relative to the total amount of thermoplastic resin composition. Data shows that the tensile strength is significantly improved, particularly in the transverse directions (TD) of the films where all tensile strengths are all greater than or equal to 20 MPa. Data shows that the tear resistance in the machine direction (MD) of the film is greater than 1650 MPa when the weight ratio of PBAT to PLA is between 9.5:0.5 and 7:3. Data shows that the tear resistance in the machine direction (MD) of the film is greater than 110 MPa when the weight ratio of PBAT to PLA is between 6:4 and 4:6. Due to differences in applications, the physical property requirements in the machine direction (MD) and transverse direction (TD) of film are different. For example, in film applications, the film needs to be stretchable in the MD direction while also needs to be able to be blown or stretched in both the TD direction; the tear resistance requirement in the TD direction is not as high as in the MD direction.

In addition, data shows that the tear resistance is significantly improved when a combination of phenolic antioxidant and styrene maleic anhydride copolymer is utilized as an additive, in comparison to using only phenolic antioxidant.

As shown in TABLE 1 and TABLE 2, when the weight ratio of the polybutylene adipate terephthalate to the polylactic acid in the thermoplastic resin composition falls within the range of 9.5:0.5 to 7:3, and the additive is 400 ppm~2800 ppm of pentaerythritol tetrakis(3-(3,5-di-tert-butyl-4-hydroxyphenyl)propionate) or 1800 ppm~2300 ppm of octadecyl-[3-(3,5-di-tert-butyl-4-hydroxyphenyl)propionate] relative to the total amount of thermoplastic resin composition, the tear resistance in the machine direction (MD) of the resulting film is greater than 1650 MPa and the elongation in the machine direction (MD) is greater than 600%. The film provided by the present disclosure exhibits high tensile strength in the MD direction and has a high resistance to tearing, which is crucial for use like packaging films or plastic bags.

In an embodiment of the present disclosure, when the weight ratio of the polybutylene adipate terephthalate to the polylactic acid in the thermoplastic resin composition falls within the range of 6:4 to 4:6, and the additive is 1800 ppm~2300 ppm of pentaerythritol tetrakis(3-(3,5-di-tert-butyl-4-hydroxyphenyl)propionate) or 400 ppm~2800 ppm of octadecyl-[3-(3,5-di-tert-butyl-4-hydroxyphenyl)propionate] relative to the total amount of thermoplastic resin composition, the tear resistance in the machine direction (MD) of the resulting film is greater than 110 MPa and the elongation in the transverse direction (TD) is greater than 26.5%. For example, in film applications, the film needs to be stretchable in the MD direction while also needs to be able to be blown or stretched in both the TD direction.

In an embodiment of the present disclosure, when the weight ratio of the polybutylene adipate terephthalate to the polylactic acid in the thermoplastic resin composition falls within the range of 9.5:0.5 to 7:3, and the additive is 400 ppm~2800 ppm of pentaerythritol tetrakis(3-(3,5-di-tert-butyl-4-hydroxyphenyl)propionate) relative to the total amount of thermoplastic resin composition, the tensile strength in the machine direction (MD) of the resulting film is greater than 33 MPa. For example, in film applications, plastic bags must possess sufficient load-bearing capacity in the MD direction to prevent breaking.

In an embodiment of the present disclosure, the weight ratio of the polybutylene adipate terephthalate to the polylactic acid in the thermoplastic resin composition falls within the range of 6:4 to 4:6, and the additive is 1800 ppm~2300 ppm of pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, the tensile strength in the machine direction (MD) of the resulting film is greater than 33 MPa. For example, in film applications, plastic bags must possess sufficient load-bearing capacity in the MD direction to prevent breaking.

In an embodiment of the present disclosure, when the weight ratio of the polybutylene adipate terephthalate to the polylactic acid in the thermoplastic resin composition falls within the range of 9.5:0.5 to 7:3, the additive is 800 ppm~1300 ppm of pentaerythritol tetrakis(3-(3,5-di-tert-butyl-4-hydroxyphenyl)propionate) (or octadecyl-[3-(3,5-di-tert-butyl-4-hydroxyphenyl)propionate]) and 100 ppm~1500 ppm of styrene maleic anhydride copolymer relative to the total amount of thermoplastic resin composition, and the weight-average molecular weight of styrene maleic anhydride copolymer is less than 10000, the tensile strength in the width direction (TD) of the resulting film is greater than 20 MPa, and the tear resistance in the length direction (MD) of the resulting film is greater than 1650 MPa.

As shown in TABLE 1, in the thermoplastic resin compositions of Example 9 and Example 10 incorporate phenolic antioxidants and styrene maleic anhydride copolymers as additives. The tear resistance and tensile strength in the length direction (MD) or width direction (TD) of the plastic films produced by these compositions are significantly improved compared to those of Example 1 and Example 3, where only phenolic antioxidants were utilized as additives. For example, in Example 9 and Example 10, the tear resistance in the length direction (MD) is greater than 1800 MPa, the tear resistance in the width direction (TD) is greater than 580 Mpa, and the tensile strength in the width direction (TD) is greater than 22 Mpa.

As shown in TABLE 2, in the thermoplastic resin compositions of Comparative Examples 11 and 12 only incorporate styrene maleic anhydride copolymers as additives, without using phenolic antioxidants. Consequently, the tear resistance in the machine direction (MD) of the plastic films is less than 1650 MPa, significantly lower than the tear resistance observed in Example 1 or 9. In the thermoplastic resin compositions of Comparative Examples 13 and 14, the additives consist of styrene maleic anhydride copolymers and phenolic antioxidants. However, the weight-average molecular weight of the styrene maleic anhydride copolymer is greater than 10000, which makes it impossible to simultaneously meet the requirements of tear resistance in the length direction (MD) greater than 1650 MPa and tensile strength in the width direction (TD) greater than 20 MPa.

[TABLE 3]

| | | | Example 2 | Example 4 | Example 6 | Example 8 | |
|---|---|---|---|---|---|---|---|
| Constituents | | PBAT (%) | 90 | 90 | 50 | 50 | |
| | | PLA (%) | 10 | 10 | 50 | 50 | |
| | Additive | Irganox® 1010 (ppm) | 2000 | - | 2000 | - | |
| | | Irganox® 1076 (ppm) | - | 2000 | - | 2000 | |
| | | Irganox® 168 (ppm) | - | - | - | - | |
| | | GS (ppm) | - | - | - | - | |
| Evaluation result | | Mn | 62,459 | 63,245 | 78,794 | 83,046 | |
| | | Mw | 121,244 | 120,973 | 150,811 | 159,841 | |
| | | Q (Mw/Mn) | 1.941 | 1.913 | 1.914 | 1.925 | |
| | | Tc (°C) | 61.7 | 58.9 | 60.8 | 56.4 | |
| | | Xc (%) | 13 | 12.6 | 8.8 | 8.7 | |
| | | | Comparative Example 15 | Comparative Example 16 | Comparative Example 17 | Comparative Example 18 | Comparative Example 19 |
| Constituents | | PBAT (%) | 90 | 90 | 90 | 50 | 50 |
| | | PLA (%) | 10 | 10 | 10 | 50 | 50 |
| | Additive | Irganox® 1010 (ppm) | - | - | - | - | - |
| | | Irganox® 1076 (ppm) | - | - | - | - | - |
| | | Irganox® 168 (ppm) | 2000 | - | - | 2000 | - |
| | | GS (ppm) | - | 2000 | - | - | 2000 |
| Evaluation result | | Mn | 60,915 | 57,973 | 52,768 | 72,891 | 66,647 |
| | | Mw | 120,478 | 121,704 | 119,403 | 148,041 | 145,006 |
| | | Q (Mw/Mn) | 1.978 | 2.099 | 2.263 | 2.031 | 2.176 |
| | | Tc (°C) | 59.2 | 57.9 | 58.3 | 58.5 | 55.9 |
| | | Xc (%) | 14.6 | 14.9 | 15 | 8.6 | 8.2 |

As shown in TABLE 3, when the additive is phenolic antioxidant and the amount of phenolic antioxidant is greater than or equal to 1 ppm but less than 3000 ppm results in enhanced physical properties. For example, the polydispersity index (Q) below 2.0 indicates excellent blendability and the attainment of well-balanced physical properties in the resin.

As shown in TABLE 3, the utilization of a non-phenolic antioxidant as an additive in the thermoplastic resin composition results in a decrease in the number-average molecular weight (Mn), an increase in the polydispersity index (Q), and a reduction in the crystallization temperatures (Tc) of the resin, even if the amount of the additive is greater than or equal to 1 ppm and less than 3000 ppm. Consequently, the resin inadequate blending capabilities and deficient crystallization behavior prevent the attainment of well-balanced physical properties.

[TABLE 4]

| | | | Comparative Example 20 | Comparative Example 21 | Comparative Example 22 | Comparative Example 23 | Comparative Example 24 |
|---|---|---|---|---|---|---|---|
| Constituents | | PBAT (%) | 100 | 100 | 100 | 100 | 100 |
| | | PLA (%) | - | - | - | - | - |
| | Additive | Irganox® 1010 (ppm) | - | 1000 | 3000 | - | - |
| | | Irganox®1076 (ppm) | - | - | - | 1000 | 3000 |
| Evaluation result | | TGA-10% (°C) | 374 | 374.3 | 374.3 | 374 | 373.9 |
| | | Difference | 0 | 0.3 | 0.3 | 0 | -0.1 |
| | | | Comparative Example 25 | Comparative Example 26 | Comparative Example 27 | Comparative Example 28 | Comparative Example 29 |
| Constituents | | PBAT (%) | 0 | 0 | 0 | 0 | 0 |
| | | PLA (%) | 100 | 100 | 100 | 100 | 100 |
| | Additive | Irganox® 1010 (ppm) | - | 1000 | 3000 | - | - |
| | | Irganox®1076 (ppm) | - | - | - | 1000 | 3000 |
| Evaluation result | | TGA-10% (°C) | 340.3 | 341.9 | 341.7 | 340.9 | 340.6 |
| | | Difference | 0 | 1.6 | 1.4 | 0.6 | 0.3 |

EP 4 506 416 A1

[TABLE 5]

| | | | Comparative Example 1 | Example 1 | Example 2 | Example 3 | Example 4 |
|---|---|---|---|---|---|---|---|
| Constituents | PBAT (%) | | 90 | 90 | 90 | 90 | 90 |
| | PLA (%) | | 10 | 10 | 10 | 10 | 10 |
| | Additive | Irganox®1010 (ppm) | - | 1000 | 2000 | - | - |
| | | Irganox®1076 (ppm) | - | - | - | 1000 | 2000 |
| Evaluation result | TGA-10% (°C) | | 356.9 | 357.7 | 358.8 | 357.9 | 358.7 |
| | Difference | | 0 | 0.8 | 1.9 | 1 | 1.8 |
| | | | Comparative Example 6 | Example 5 | Example 6 | Example 7 | Example 8 |
| Constituents | PBAT (%) | | 50 | 50 | 50 | 50 | 50 |
| | PLA (%) | | 50 | 50 | 50 | 50 | 50 |
| | Additive | Irganox®1010 (ppm) | - | 1000 | 2000 | - | - |
| | | Irganox®1076 (ppm) | - | - | - | 1000 | 2000 |
| Evaluation result | TGA-10% (°C) | | 329.8 | 343.4 | 344.1 | 343.1 | 344.5 |
| | Difference | | 0 | 13.6 | 14.3 | 13.3 | 14.7 |

[TABLE 6]

| | | | Comparative Example 1 | Comparative Example 2 | Comparative Example 3 | Comparative Example 4 | Comparative Example 5 |
|---|---|---|---|---|---|---|---|
| Constituents | | PBAT (%) | 90 | 90 | 90 | 90 | 90 |
| | | PLA (%) | 10 | 10 | 10 | 10 | 10 |
| | Additive | Irganox®1010 (ppm) | - | 3000 | 5000 | - | - |
| | | Irganox®1076 (ppm) | - | - | - | 3000 | 5000 |
| | | XIRAN1000P (ppm) | - | - | - | - | - |
| Evaluation result | | TGA-10% (°C) | 356.9 | 358.7 | 357.6 | 357.5 | 353.2 |
| | | Difference | 0 | 1.8 | 0.7 | 0.6 | -3.7 |
| | | | Comparative Example 6 | Comparative Example 7 | Comparative Example 8 | Comparative Example 9 | Comparative Example 10 |
| Constituents | | PBAT (%) | 50 | 50 | 50 | 50 | 50 |
| | | PLA (%) | 50 | 50 | 50 | 50 | 50 |
| | Additive | Irganox®1010 (ppm) | - | 3000 | 5000 | - | - |
| | | Irganox®1076 (ppm) | - | - | - | 3000 | 5000 |
| | | XIRAN1000P (ppm) | - | - | - | - | - |
| Evaluation result | | TGA-10% (°C) | 329.8 | 342 | 341.8 | 341.4 | 339.2 |
| | | Difference | 0 | 12.2 | 12 | 11.6 | 9.4 |

[TABLE 7]

| | | | Comparative Example 1 | Comparative Example 11 | Comparative Example 12 | Comparative Example 13 | Comparative Example 14 |
|---|---|---|---|---|---|---|---|
| Constituents | | PBAT (%) | 90 | 90 | 90 | 90 | 90 |
| | | PLA (%) | 10 | 10 | 10 | 10 | 10 |
| | Additive | Irganox®1010 (ppm) | - | - | - | 1000 | - |
| | | Irganox®1076 (ppm) | - | - | - | - | 1000 |
| | | XIRAN1000P (ppm) | - | 750 | - | - | - |
| | | XIRAN4000 (ppm) | - | - | 1500 | 1500 | 1500 |
| Evaluation result | | TGA-10% (°C) | 356.9 | 357.1 | 344.8 | 350.4 | 348.9 |
| | | Difference | 0 | 0.2 | -12.1 | -6.5 | -8 |

| | | | Example 9 | Example 10 |
|---|---|---|---|---|
| Constituents | | PBAT (%) | 90 | 90 |
| | | PLA (%) | 10 | 10 |
| | Additive | Irganox®1010 (ppm) | 1000 | - |
| | | Irganox®1076 (ppm) | - | 1000 |
| | | XIRAN1000P (ppm) | 750 | 750 |
| | | XIRAN4000 (ppm) | | |
| Evaluation result | | TGA-10% (°C) | 367.5 | 365.4 |
| | | Difference | 10.6 | 8.5 |

Data shown in TABLE 4 indicates that the utilization of only PBAT and phenolic antioxidant, or only PLA and phenolic antioxidant, cannot effectively enhance in thermal stability (TGA-10%). Data even indicates that the thermal stability is reduced utilizing only PBAT with Irganox® 1076. In addition, utilizing PLA without PBAT may result in challenges such as poor tear resistance, slow crystallization rate, reduced crystallinity, and a lower heat deflection temperature, making it difficult to meet the market technical demand by the market for the film. Conversely, employing PBAT without PLA will have problems such as lower strength and modulus. Data shown in TABLE 4 to TABLE 7 indicates that the combination of PBAT, PLA and a phenolic antioxidant, or the combination of PBAT, PLA, phenolic antioxidant and styrene maleic anhydride copolymer, can effectively enhance thermal stability (TGA-10%).

Data shown in TABLE 4 to TABLE 7 indicates that when the weight ratio of the polybutylene adipate terephthalate to the polylactic acid in the thermoplastic resin composition falls within the range of 9.5:0.5 to 7:3, and the additive is 1800 ppm~2300 ppm of either pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, results in a temperature corresponding to 10% mass loss (TGA-10%) exceeding or equal to 358 °C in thermogravimetric analysis, with a temperature difference exceeding 1.6 °C.

Data shown in TABLE 4 to TABLE 7 indicates that when the weight ratio of the polybutylene adipate terephthalate to the polylactic acid in the thermoplastic resin composition falls within the range of 6:4 to 4:6, the additive is 400 ppm~2800 ppm of either pentaerythritol tetrakis(3-(3,5-di-tert-butyl-4-hydroxyphenyl)propionate) or octadecyl-[3-(3,5-di-tert-butyl-4-hydroxyphenyl)propionate] relative to the total amount of thermoplastic resin composition, results in a temperature corresponding to 10% mass loss (TGA-10%) exceeding or equal to 343 °C in thermogravimetric analysis, with a temperature difference exceeding 13 °C.

Data shown in TABLE 4 to TABLE 7 indicates that when the weight ratio of the polybutylene adipate terephthalate to the polylactic acid in the thermoplastic resin composition falls within the range of 9.5:0.5 to 7:3, the additive is 800 ppm~1300 ppm of pentaerythritol tetrakis(3-(3,5-di-tert-butyl-4-hydroxyphenyl)propionate) and 100 ppm~1500 ppm of styrene maleic anhydride copolymer relative to the total amount of thermoplastic resin composition, along with the weight-average molecular weight of styrene maleic anhydride copolymer is less than 10000, results in a temperature corresponding to 10% mass loss (TGA-10%) exceeding or equal to 365 °C in thermogravimetric analysis, with a temperature difference exceeding 8 °C.

The present disclosure provides a thermoplastic resin composition comprising polybutylene adipate terephthalate, polylactic acid, and an additive. It also outline a method for preparing a thermoplastic resin composition and a use of a plastic film made from it. By incorporating either a phenolic antioxidant or a combination of phenolic antioxidant and styrene maleic anhydride copolymer as the additive, with the weight-average molecular weight (Mw) of the styrene maleic anhydride copolymer less than 10000, and the amount of the phenolic antioxidant being greater than or equal to 1 ppm and less than 3000 ppm, the thermoplastic resin composition according to the present disclosure exhibits balanced physical properties such as excellent heat resistance, excellent tensile strength and good crystallinity.

While the disclosure has been described by way of example and in terms of the exemplary embodiment(s), it is to be understood that the disclosure is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

1. A thermoplastic resin composition, wherein the thermoplastic resin composition comprises:

   polybutylene adipate terephthalate (PBAT);
   polylactic acid; and
   an additive, wherein the additive is one selected from the group consisting of phenolic antioxidant and a combination of phenolic antioxidant and styrene maleic anhydride copolymer,
   wherein the styrene maleic anhydride copolymer has a weight-average molecular weight (Mw) less than 10000, and an amount of the phenolic antioxidant is greater than or equal to 1 ppm and less than 3000 ppm.

2. The thermoplastic resin composition according to claim 1, wherein the amount of the phenolic antioxidant is greater than or equal to 400 ppm and less than or equal to 2800 ppm.

3. The thermoplastic resin composition according to claim 2, wherein the amount of the phenolic antioxidant is greater than or equal to 800 ppm and less than or equal to 2300 ppm.

4. The thermoplastic resin composition according to anyone of the claims 1 to 3, wherein an amount of the styrene maleic anhydride copolymer is between 1 ppm and 2000 ppm.

5. The thermoplastic resin composition according to anyone of the claims 1 to 4, wherein an amount of maleic anhydride monomers in the styrene maleic anhydride copolymer is between 20 % and 55 %.

6. The thermoplastic resin composition according to anyone of the claims 1 to 5, wherein the weight-average molecular weight of the styrene maleic anhydride copolymer is less than 6000.

7. The thermoplastic resin composition according to claim 1, wherein the phenolic antioxidant is at least one selected from the group consisting of pentaerythritol tetrakis(3-(3,5-di-tert-butyl-4-hydroxyphenyl)propionate), octadecyl-[3-(3,5-di-tert-butyl-4-hydroxyphenyl)propionate], triethylene glycol bis(3-tert-butyl-4-hydroxy-5-methylphenyl) propionate, and octyl-3,5-di-tert-butyl-4-hydroxy-hydrocinnamate.

8. The thermoplastic resin composition according to anyone of the claims 1 to 7, wherein a weight ratio of the polybutylene adipate terephthalate to the polylactic acid falls within the range of 9.5:0.5 to 0.5:9.5.

9. The thermoplastic resin composition according to claim 8, wherein the amount of the phenolic antioxidant is greater than or equal to 400 ppm and less than 2800 ppm.

10. The thermoplastic resin composition according to claim 9, wherein the phenolic antioxidant is at least one selected from the group consisting of pentaerythritol tetrakis(3-(3,5-di-tert-butyl-4-hydroxyphenyl)propionate), octadecyl-[3-(3,5-di-tert-butyl-4-hydroxyphenyl)propionate], triethylene glycol bis(3-tert-butyl-4-hydroxy-5-methylphenyl) propionate, and octyl-3,5-di-tert-butyl-4-hydroxy-hydrocinnamate.

11. The thermoplastic resin composition according to claim 10, wherein an amount of pentaerythritol tetrakis(3-(3,5-di-tert-butyl-4-hydroxyphenyl)propionate) is greater than or equal to 1800 ppm and less than or equal to 2300 ppm when the weight ratio of the polybutylene adipate terephthalate to the polylactic acid falls within the range of 9.5:0.5 to 7:3; or the amount of pentaerythritol tetrakis(3-(3,5-di-tert-butyl-4-hydroxyphenyl)propionate) is greater than or equal to 400 ppm and less than or equal to 2800 ppm when the weight ratio of the polybutylene adipate terephthalate to the polylactic acid falls within the range of 6:4 to 4:6.

12. The thermoplastic resin composition according to claim 10 or 11, wherein when the weight ratio of the polybutylene adipate terephthalate to the polylactic acid falls within the range of 9.5:0.5 to 7:3, an amount of pentaerythritol tetrakis(3-(3,5-di-tert-butyl-4-hydroxyphenyl)propionate) is greater than or equal to 400 ppm and less than or equal to 2800 ppm, or an amount of octadecyl-[3-(3,5-di-tert-butyl-4-hydroxyphenyl)propionate] is greater than or equal to 1800 ppm and less than or equal to 2300 ppm.

13. A method for preparing a thermoplastic resin composition, wherein the method comprises:

feeding polybutylene adipate terephthalate, polylactic acid, and an additive into a molding apparatus to produce the thermoplastic resin composition,
wherein the additive is one selected from the group consisting of phenolic antioxidant and a combination of phenolic antioxidant and styrene maleic anhydride copolymer,
wherein the styrene maleic anhydride copolymer has a weight-average molecular weight less than 10000, and an amount of the phenolic antioxidant in the thermoplastic resin composition is greater than or equal to 1 ppm and less than 3000 ppm.

14. A use of a plastic film, wherein the plastic film is used in any one of plastic bags, shopping bags and agricultural films, and the plastic film is produced from the thermoplastic resin composition according to any one of claims 1 to 12.

Europäisches
Patentamt

European
Patent Office

Office européen
des brevets

# EUROPEAN SEARCH REPORT

Application Number

EP 24 19 2343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 160 751 A (ZHEJIANG XINGBANG NEW MATERIAL TECH CO LTD) 11 October 2022 (2022-10-11) * claims 1-3,7; examples 2-4 * ----- | 1-14 | INV. C08L67/02 |
| X | CN 115 058 106 A (UNIV HUNAN TECHNOLOGY) 16 September 2022 (2022-09-16) * paragraphs [0027] - [0031]; claims 1,2 * ----- | 1-14 | |

TECHNICAL FIELDS
SEARCHED (IPC)

C09J
C08L

The present search report has been drawn up for all claims

| Place of search | Date of completion of the search | Examiner |
|---|---|---|
| The Hague | 6 January 2025 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2343

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2025

| Patent document cited in search report | | Publication date | Patent family member(s) | Publication date |
|---|---|---|---|---|
| CN 115160751 | A | 11-10-2022 | NONE | |
| CN 115058106 | A | 16-09-2022 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104744898 A